**Europäisches Patentamt**

**European Patent Office**

**Office européen des brevets**

(11) Numéro de publication : **0 401 089 B1**

(12)
# FASCICULE DE BREVET EUROPEEN

(45) Date de publication du fascicule du brevet :
**01.07.92 Bulletin 92/27**

(21) Numéro de dépôt : **90401377.8**

(22) Date de dépôt : **22.05.90**

(51) Int. Cl.$^5$ : **C02F 1/24,** B03D 1/14

(54) Appareil pour la clarification de liquides, tels que notamment: eau, jus de fruit, moût de raisin ou similaires.

(30) Priorité : **01.06.89 FR 8907259**

(43) Date de publication de la demande :
**05.12.90 Bulletin 90/49**

(45) Mention de la délivrance du brevet :
**01.07.92 Bulletin 92/27**

(84) Etats contractants désignés :
**BE CH DE ES GB GR IT LI**

(56) Documents cités :
**CH-A- 567 439**
**DE-A- 1 137 997**
**US-A- 3 501 000**
**US-A- 3 977 970**
**US-A- 4 216 085**
**US-A- 4 743 379**

(73) Titulaire : **DEGREMONT S.A.**
**183, Avenue du 18 Juin 1940**
**F-92508 Rueil-Malmaison Cédex (FR)**

(72) Inventeur : **Vion, Patrick**
**17, rue de l'Argonne**
**F-78800 Houilles (FR)**

(74) Mandataire : **Armengaud, Charles**
**Cabinet ARMENGAUD AINE 3, Avenue Bugeaud**
**F-75116 Paris (FR)**

Jouve, 18, rue Saint-Denis, 75001 PARIS

## Description

L' invention concerne un appareil destiné à la clarification de liquides, tels que notamment eau, jus de fruit, moût de raisin, cet appareil comportant une enceinte dans laquelle est reçu le liquide à traiter après un prétraitement, tel que dégrillage ou tamisage, enceinte de laquelle le liquide est amené, après sa pressurisation, à un flottateur, qui alimente en liquide clarifié un système, tel que système filtrant, destiné à parfaire le traitement du liquide, système dont la demande en liquide est variable et généralement décroissante.

DE-A-1 137 997 décrit un appareillage destiné à la clarification de liquides qui comprend une enceinte dans laquelle est introduit le liquide à traiter et un décanteur dans lequel on effectue une aération superficielle de l'eau à traiter.

Un tel dispositif connu ne permet pas de réaliser efficacement une régulation du fonctionnement.

En conséquence, le but de l'invention est de réaliser un appareil compact dont l'équilibre hydraulique entre les différents constituants de l'appareil est assuré avec le minimum de contrôle et de régulation, quelles que soient les variations de débit.

Ce but est atteint, conformément à l'invention, par un appareil destiné à la clarification de liquides, tels que notamment eau, jus de fruits, moûts, tels que moûts de raisin, comportant une canalisation d'amenée de liquide brut, un dispositif de prétraitement, tel que dégrillage, un bac de stockage intermédiaire, une pompe de pressurisation, et un flottateur d'où le liquide épuré quitte l'appareil par une canalisation vers l'utilisation et notamment vers un système filtrant destiné à parfaire le traitement de ce liquide, caractérisé en ce que le flottateur est placé au-dessus de l'ensemble de prétraitement, et muni dans son compartiment de sortie d'un trop-plein qui, lors d'une baisse de la demande en aval de l'appareil entraînant une montée du niveau dans le compartiment, retourne l'excédent de liquide traité dans la cuve, provoquant la montée du niveau dans ladite cuve et la fermeture partielle d'une vanne, à flotteur flottant sur le liquide présent dans la cuve, réglant l'arrivée de liquide brut par la canalisation en maintenant constant le niveau atteint par le liquide dans ladite cuve.

Grâce aux dispositions adoptées suivant l'invention, l'équilibre est ainsi réalisé par égalisation du débit d'alimentation en liquide de l'appareil au débit de la demande, susceptible d'être variable en aval de l'appareil, la différence entre le débit entrant et le débit du réglage initial étant recirculée dans une boucle formée par l'enceinte inférieure, la pompe assurant la pressurisation du liquide en vue de sa flottation et le flottateur, différence régulée par la présence du trop-plein dans le flottateur.

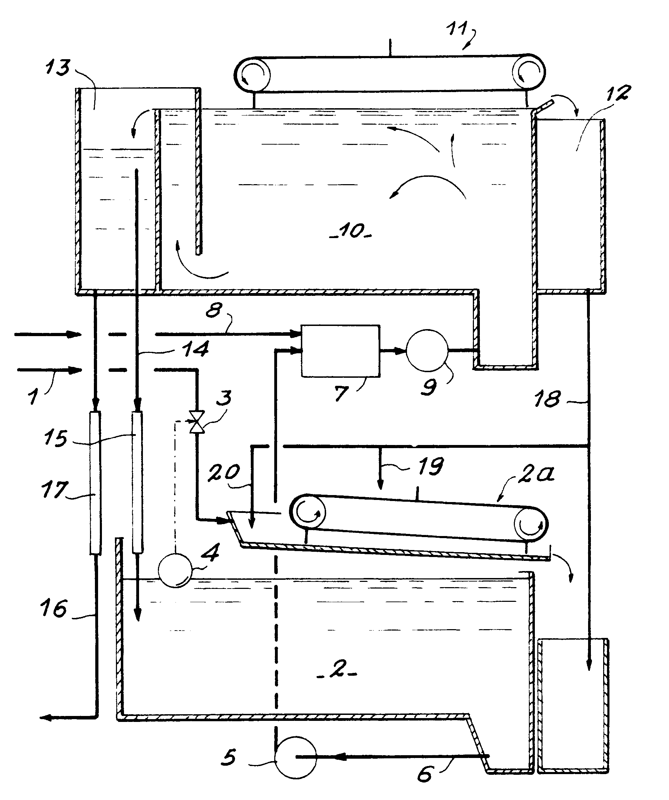

On a décrit ci-après, en référence à la figure unique du dessin schématique annexé, une forme de réalisation de l'invention, donnée uniquement à titre d'exemple non limitatif.

Conformément à cette forme de réalisation, le liquide à traiter est amené, à partir par exemple d'un bac en charge (non représenté) par une canalisation 1 à une cuve 2, en transitant au préalable par un dispositif 2a qui peut être un dégrillage grossier, une grille filtrante, une grille d'épaississement ou l'équivalent.

Conformément à l'invention, la cuve 2 est placée à la base de l'appareil.

Sur la canalisation 1 d'amenée du liquide est diposée une vanne 3 à flotteur 4, ce flotteur étant placé dans la cuve 2.

De la cuve 2, le liquide est repris par une pompe 5 branchée sur la canalisation 6, pour être pressurisé dans une enceinte 7 où il est saturé d'un gaz introduit par une canalisation 8. Le liquide pressurisé est, avant son introduction dans le flottateur 10, détendu par un organe adapté 9 de façon à créer au sein du liquide, les microbulles qui vont permettre sa clarification par flottation des particules que contient ce liquide.

Le flottateur 10 est équipé d'un racleur 11 de surface qui évacue les particules séparées vers une goulotte 12, d'où elles peuvent, uniquement par gravité grâce aux dispositions suivant l'invention, être amenées par la canalisation 18 en différents points de l'appareil, par exemple, comme représenté, en 19 et 20 sur la grille d'épaissississement) ou évacuées de l'appareil.

A l'opposé, le liquide clarifié est recueilli dans un compartiment 13 muni, conformément à l'invention, d'un trop-plein 14 débouchant dans la cuve 2 et muni d'un élément transparent 15, permettant de constater le passage éventuel du liquide.

Du compartiment 13, le liquide clarifié est amené, par une canalisation 16, munie d'un voyant 17 à un système filtrant : à sable, à membrane, par osmose inverse ou tout autre dispositif approprié (non représenté), qui constitue la "demande aval", laquelle diminue très généralement avec le temps, quelle que soit la nature du système utilisé.

L'appareil est mis en oeuvre et fonctionne de la façon suivante :

L'opérateur règle le débit du liquide sortant du compartiment 13 du flottateur, par réglage du débit de la pompe de transfert 5, en fonction de la "demande aval", le voyant 17 lui permettant de repérer le niveau atteint dans la conduite 17 d'amenée du liquide au système de filtration aval.

Du côté amont, la vanne 3 à flotteur 4 permet de maintenir un niveau constant dans la cuve 2 par égalisation du débit d'alimentation et du débit de la pompe de transfert 5.

Quand la demande diminue, ce qui est le cas général pour tous les systèmes filtrants, le niveau monte dans le compartiment 13 jusqu'au trop plein 14 qui retourne vers la cuve 2, la différence entre le débit de la pompe 5 et celui du liquide passant par la canalisation 16. De son côté, la vanne 3 à flotteur 4 va se caler de telle façon que le débit d'alimentation soit égal au débit de sortie de l'effluent.

A la limite, si la demande est nulle, le débit généré par la pompe 5 est totalement recirculé sans risque de débordement et de dommages pour la pompe ou pour l'installation elle-même.

Dans la pratique, l'exploitant peut vérifier au moyen de l'élément transparent 15 équipant le trop-plein 14, l'importance du recyclage sur la cuve 2 et donc l'excès de l'alimentation par la pompe 5. Il peut alors, s'il le désire, réduire le débit de cette pompe.

Le système peut également fonctionner avec une "demande aval" variant dans les deux sens, c'est-à-dire croissante ou décroissante, à condition de régler le débit de la pompe 5 sur le débit maximal de "demande aval".

On peut apporter différentes variantes à la forme de réalisation décrite et représentée sans sortir du cadre de l'invention.

C'est ainsi qu'au lieu d'une "flottation directe" qui s'exerce uniquement au moyen du liquide à traiter, on peut utiliser la "flottation indirecte" qui fait intervenir une partie de l'effluent sortant du flottateur, pressurisé et détendu pour être mélangé au liquide brut qui, dans ce cas, est introduit à la base du flottateur grâce à une pompe auxiliaire.

Il est également possible d'utiliser, pour permettre de réaliser sur le liquide brut une décantation par floculation, un floculateur au lieu d'une simple cuve.

L'appareil suivant l'invention se prête particulièrement au traitement d'eau ; et, dans le domaine agro-alimentaire, particulièrement à la clarification de jus de fruit et de moûts, tels que moûts de raisin.

## Revendications

1. Appareil destiné à la clarification de liquides, tels que notamment eau, jus de fruits, moûts, tels que moûts de raisin, comportant une canalisation d'amenée de liquide brut (1), un dispositif de prétraitement (2a), tel que dégrillage, un bac de stockage intermédiaire (2), une pompe de pressurisation (5), et un flottateur (10) d'où le liquide épuré quitte l'appareil par une canalisation (16) vers l'utilisation et notamment vers un système filtrant destiné à parfaire le traitement de ce liquide, caractérisé en ce que le flottateur (10) est placé au dessus de l'ensemble (2, 2a) de prétraitement et muni dans son compartiment de sortie (13) d'un trop-plein (14) qui, lors d'une baisse de la demande en aval de l'appareil entrainant une montée du niveau dans le compartiment (13), retourne l'excédent de liquide traité dans la cuve (2), provoquant la montée du niveau dans ladite cuve et la fermeture partielle d'une vanne (3) à flotteur (4), flottant sur le liquide présent dans la cuve (2), réglant l'arrivée de liquide brut par la canalisation (1) en maintenant constant le niveau atteint par le liquide dans ladite cuve (2).

2. Appareil suivant la revendication 1, caractérisé en ce que la pompe de pressurisation (5) de la flottation, est utilisée pour assurer le transfert du liquide du prétraitement vers le flottateur, permettant de fonctionner avec une faible charge disponible en amont de l'appareil, et autorisant le recyclage éventuel, par simple gravité, des particules flottantes recueillies à la surface du flottateur, en un point quelconque du prétaitement.

3. Appareil suivant la revendication 1, caractérisé en ce que le trop-plein (14) est équipé d'un élément transparent (15) permettant de vérifier l'importance du recyclage vers la cuve (2) et donc de réduire l'excès de l'alimentation par la pompe, par diminution de son débit.

4. Appareil suivant l'une quelconque des revendications précédentes, caractérisé en ce qu'un voyant (17) est prévu sur la canalisation (16) amenant le liquide clarifié au système aval de traitement, ce voyant permettant à l'opérateur d'ajuster le débit de la pompe de transfert (5) à la demande aval, en observant le niveau du liquide dans la canalisation (16).

5. Appareil suivant la revendication 1, caractérisé en ce que le flottateur (10) est à flottation directe ou indirecte.

## Patentansprüche

1. Vorrichtung zum Klären von Flüssigkeiten, insbesondere Wasser, Fruchtsaft, Moste, wie etwa Traubenmoste, mit einem Rohrleitungssystem zum Zuführen der rohen Flüssigkeit (1), einer Einrichtung zur Vorbehandlung (2a), wie etwa einer Rechenreinigung, einem Zwischenlagertank (2), einer Kompressionspumpe (5) und einer Schwimmaufbereitungseinrichtung (10), von der aus die gereinigte Flüssigkeit die Vorrichtung durch ein Rohrleitungssystem (16) verläßt, um verwendet und insbesondere einem für die Endbehandlung der Flüssigkeit bestimmten Filtriersystem zugeführt zu werden, **dadurch gekennzeichnet, daß** die Schwimmaufbereitungseinrichtung (10) über dem Vorbehandlungskomplex. (2,2a) angeordnet ist und in seiner Ausgangskammer (13) mit einem Überlauf (14) versehen ist der, wenn weniger Flüssigkeit von der nachgeschalteten Einrichtung angefordert wird, was ein Ansteigen des Pegels in der Kammer (13) bewirkt, den Überschuß an behandelter Flüssigkeit zum Behälter (2) zurückführt und so ein Ansteigen des Pegels in dem Behälter und das teilweise Schließen eines durch einen Schwimmer (4) gesteuerten Ventils (3) bewirkt, der auf der in dem Behälter (2) befindlichen Flüssigkeit treibt und das Eintreten der rohen Flüssigkeit durch das Rohrleitungssystem (1) regelt und dabei den durch die Flüssigkeit in dem Behälter (2) erreichten Pegel konstant hält.

2. Vorrichtung nach Anspruch 1, **dadurch gekennzeichnet, daß** die Kompressionspumpe (5) der Schwimmaufbereitung verwendet wird, um den Transport der Flüssigkeit von der Vorbehandlung zur Schwimmaufbereitung zu gewährleisten, wodurch ein Betreiben der Vorrichtung mit einer stromaufwärts verfügbaren geringen Ladung und eine mögliche Rückführung von schwimmenden, auf der Oberfläche der Schwimmaufbereitung angesammelten Teilchen aufgrund der Gravitation an jedem möglichen Punkt der Vorbehandlung ermöglicht wird.

3. Vorrichtung nach Anspruch 1, **dadurch gekennzeichnet, daß** der Überfluß (14) ein durchsichtiges Element (15) umfaßt, das es ermöglicht, festzustellen, in welchem Maß Flüssigkeit in den Behälter (2) zurückgeführt wird, und dann die übermäßige Zufuhr durch die Pumpe durch Verringerung deren Leistung zu reduzieren.

4. Vorrichtung nach einem der vorhergehenden Ansprüche, **dadurch gekennzeichnet, daß** in dem Rohrleitungssystem (16), das die geklärte Flüssigkeit zum nachgeschalteten Behandlungssystem transportiert, ein Schauglas (17) vorgesehen ist, welches es der Bedienperson durch Beobachten des Flüssigkeitspegels in dem Rohrleitungssystem (16) ermöglicht, die Pumpenleistung für die Zufuhr (5) auf die stromabwärtigen Anforderungen einzustellen.

5. Vorrichtung nach Anspruch 1, **dadurch gekennzeichnet, daß** die Schwimmaufbereitungseinrichtung (10) für die direkte oder die indirekte Floation verwendbar ist.

**Claims**

1. Apparatus intended for the clarification of liquids, such as in particular water, fruit juices, rusts, such as grape rusts, having a raw liquid supply pipe (1)), a pretreatment device (2a), such as degrilling, an intermediate storage tank (2), a pressurization pump (5) and a flotation machine (10) from where the purified liquid leaves the apparatus by a pipe (16) for use purposes and in particular to a filtering system for completing the treatment of said liquid, characterized in that the flotation machine (10) is placed above the pretreatment assembly (2, 2a) and is provided in its discharge compartment (13) with an overflow (14) which, when there is a reduction of demand downstream of the apparatus leading to a level rise in the compartment (13), returns the excess treated liquid to the vessel (2), leading to a rise in the level in said vessel and the partial closure of a valve (3) having a float (4), floating on the liquid present in the vessel (2), regulating the inflow of raw liquid through the pipe (1) by keeping constant the level reached by the liquid in said vessel (2).

2. Apparatus according to claim 1, characterized in that the pressurization pump (5) of the flotation system is used for transferring liquid from the pretreatment system to the flotation system permitting operation with a small available charge upstream of the apparatus and authorizing the possible recycling, by gravity, of the floating particles collected on the surface of the flotation machine at a random point of the pretreatment.

3. Apparatus according to claim 1, characterized in that the overflow (14) is equipped with a tranparent element (15) making it possible to check the magnitude of the recycling to the vessel (2) and therefore reduce the excess of the supply by the pump by reducing its delivery.

4. Apparatus according to any one of the preceding claims, characterized in that an indicator (17) is provided on the pipe (16) supplying the clarified liquid to the downstream treatment system, said indicator enabling the operator to adjust the delivery of the transfer pump (5) to the downstream demand by observing the level of the liquid in the pipe (16).

5. Apparatus according to claim 1, characterized in that the flotation machine (10) has direct or indirect flotation.